# EUROPEAN PATENT APPLICATION

(11) **EP 2 479 685 A1**
(43) Date of publication of application: **25.07.2012**
(21) Application number: 11461505.7
(22) Date of filing: 25.01.2011
(51) Int. Cl.: G06F 17/30, G06Q 30/00

(54) **Method for providing a web page content**

(71) Applicant: AdTaily Sp. z o.o., 31-038 Kraków (PL)
(72) Inventor: Wujec, Pawel, 02-834, Warszawa (PL); Ekiert, Marcin, 02-795, Warszawa (PL); Jakub, Krzych, 30-529, Kraków (PL); Szymczyszyn, Tomasz, 38-300, Gorlice (PL); Smietanka, Pawel, 35-210, Rzeszów (PL)
(74) Representative: Sielewiesiuk, Jakub

(57) **Abstract**

The invention is related to a method for providing a web page content to a user, by a system comprising a first server (112), a second server and a third server (119), wherein said third server (119) has an access to a database of pre-registered users, storing information sufficient to identify said pre-registered users and connections between said pre-registered users, said method comprising the steps of:
(i) obtaining a unique ID assigned to a first sub-content (116) from a first server (112),
(ii) obtaining said first sub-content (116) from a second server,
(iii) obtaining a second sub-content (117) from said third server,
(iv) creating said web page content by adding said second sub-content (117) to said first sub-content (116),
(v) displaying said web page content on said web page (113),
**characterized in that**
said second sub-content (117) is a trigger of an application on said third server (119), preferably a web link or a web form initiating said application, and wherein said application, once initiated by said trigger, performs the following steps:
(vi) authenticating said user and
(vii) recording at least information associating said unique ID and said user in a log accessible for said third server (119).

## Description

### Technical Field

The invention is related to a method for providing a web page content to a user, by a system comprising a first server, a second server and a third server, wherein said third server has an access to a database of pre-registered users, storing information sufficient to identify said pre-registered users and connections between said pre-registered users. The method can be applied in the e.g. field of internet advertising.

### Background

Various methods are known for providing a web page content. For example, the international patent application no. WO 02/21749 discloses a method for creating such content from two or more sub-contents selected by a user, wherein the user sends his order to a server and said server obtains the sub-content as ordered by the user (e.g. news, weather, stock quotes etc.) from other servers, and forms a web page by aggregating the thus obtained sub-content. Such web page is then presented to the user. This is an example of so-called server-side technology. It means that the steps leading to presenting the desired content to the user are performed on the server's side. It has a disadvantage, because if any of the requested sub-contents needs updating - then the whole web page prepared for the user has to be updated and refreshed.

Another method, common in the field of internet advertising, utilizes a server (so-called adserver) and a script embedded in the code of a web page viewed by a user in order to display an advertisement in a dedicated part of this web page. Once a user enters the web page, the script is executed on the client's side (i.e. on the user's terminal). As the result of executing the script, the user's web browsers connects to the adserver and obtains an advertisement, which is then displayed in a dedicated part of the web page the user is viewing. This is an example of so-called client-side technology. It has the advantage that - once the script is embedded in the web page - different advertisements may be displayed on this page, without the need to update/refresh all the remaining content of the web page. Typically, advertisements from more than one adserver are not aggregated and displayed together.

US patent no. US 6,826,594 B1 discloses a method involving a dynamic content code embedded in a web page, wherein said code is execute on the client's side (client-side technology) and is able to obtain, aggregate and display together, in a dedicated portion of the web page, two or more sub-contents coming from two of more servers. Although said sub-contents may be "active" (e.g. clickable), including revenue links, US 6,826,594 B1 fails to teach an approval button offered by social media systems (such as Facebook's "Like" button) as an example of such "active" sub-content.

However, displaying an advertisement together with an approval button, enabling a social media system user to express her approval of the advertisement, creates a very attractive and useful possibility in the field of internet advertising. Not only can it be used to easily spread the given advertisement to the connections of the user in the social media system, but also it provides an advanced, sophisticated reporting tool. With such a reporting tool, the advertiser may get a detailed report about users who like the advertisement, including any personal information provided voluntary by the users to the social media system. Such report is invaluable for advertising, marketing etc. Last but not least, it enables to introduce a model for settlements between publishers/advertising networks and advertisers, in which the cost of campaign depends on the number of approval actions ("likes" ― Cost Per Like model).

It is therefore the objective of the present invention to propose a new method for providing a web page content to a user, said method offering advantages mentioned in the previous paragraph and preferably utilizing client-side technology.

### Summary

According to the invention, a method for providing a web page content to a user, by a system comprising a first server, a second server and a third server, wherein said third server has an access to a database of pre-registered users, storing information sufficient to identify said pre-registered users and connections between said pre-registered users, said method comprising the steps of:
(i) obtaining a unique ID assigned to a first sub-content from a first server,
(ii) obtaining said first sub-content from a second server,
(iii) obtaining a second sub-content from said third server,
(iv) creating said web page content by adding said second sub-content to said first sub-content,
(v) displaying said web page content on said web page,
   **is characterized in that**
   said second sub-content is a trigger of an application on said third server, preferably a web link or a web form initiating said application, and wherein said application, once initiated by said trigger, performs the following steps:
(vi) authenticating said user and
(vii) recording at least information associating said unique ID and said user in a log accessible for said third server.
This enables linking the first sub-content (e.g. an advertisement) with information about the user, who "likes" this first sub-content.

Preferably, the aforementioned steps (i) - (v) are executed by a piece of code, embedded in said web page. More preferably, said piece of code (115) is a client-side technology code, such as Javascript, Macromedia Flash or Silverlight code. This provides the benefits of the client-side technology: once the code is embedded in said web page, different advertisements may be displayed each time the user is viewing the web page, without the need to refresh or reload all the remaining content of the web page.

In a preferred embodiment of the inventive method, said application on said third server additionally performs the step of:
(viii) recording in said log accessible for said third server additional information associated with said user and/or said unique ID, such as said user's data retrieved from said database of pre-registered users, date and time of initiation of said application by said trigger, information related to referral by said user, in particular - the web address of said web page.

This step enables creation of reports characterizing the population of users who "like" given advertisement, based on information such users provided to the social media system.

Said authentication step (vi) is preferably carried out using a file (cookie) stored on the user's terminal or any other authentication method provided by web browser or the user's terminal, employed by said user to view said web page. Alteranatively, said authentication step (vi) is carried out by re-directing said user to a login page, asking said user to provide information sufficient to identify him in said database of pre-registered users.

In one of favourable embodiments, the method according to the present invention further comprises a step of:
(ix) providing information about said first sub-content, uniquely identified by said associated unique ID to pre-registered users, to whom said user has connections in said database of pre-registered users.

This step enables easy spread of the advertisement, which is "liked" by the user, in particular by sending the information about the advertisement and the fact of approval to all connections of the user in the social media system. In case of the Facebook, this simply means putting the information on the so-called "wall" of the user's connections.

Preferably, said unique ID is a Uniform Resource Locator, URL.

In one of preferred embodiments, said first server and said second server are the same server. In particular, it means that the same server may be user to provide the unique ID and the first sub-content (e.g. an advertisement).

Preferably, said third server is a social media server, such as Facebook, Twitter, MySpace, Blip, Linkedln, Nasza Klasa, Grono etc.

In a further preferred embodiment, the inventive method further comprises a step of:
(x) generating a report associating information about said first sub-content and information retrieved from said log accessible for said third server, associated with said first sub-content by said unique ID, and storing said report in a database.

Preferably, said report includes any of the following information: information related to referral by said user, in particular - the web address of said web page, number of views of said web page, number of views of said first sub-content having said unique ID, number of clicks of said second sub-content.

More preferably, said report also includes any of the following information: said user's data retrieved from said database of pre-registered users, date and time of clicking said second sub-content by said user.

Still more preferably, said report further includes additional information about said first sub-content having said unique ID, such as advertising campaign information, client's data, cost information.

### Brief Description of the Drawings

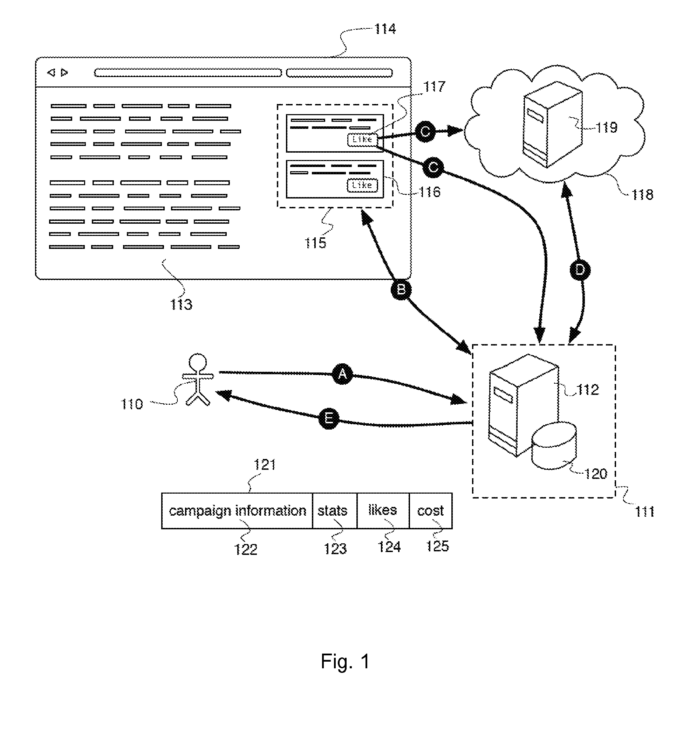

A preferred embodiment of the present invention is described below in a more detailed way with reference to the attached drawing, which presents architecture of a system and illustrates a scenario of providing a web page content to a user, by a method according to the present invention.

### Detailed Description

The example below serves only as an illustration and does not limit the scope of the present invention.

### Example 1 - system for displaying advertisements and calculating advertising campaign costs based on a "Cost Per Like" model.

In this embodiment, the method according to the invention is applied in an internet system for managing, distribution and displaying advertising campaigns, wherein said campaigns are enriched with action buttons (such as "Like" button), provided by social media, and therefore engaging users. The system counts ("measures") the engagement by the number of clicks of said action buttons (number of "likes") and uses this result to charge the cost of the campaign to the advertisers, proportionally to the number of "likes".

There are many models for settlements between publishers/advertising networks and advertisers in the market of internet advertising. The simplest models are e.g. constant daily rate for displaying an advertisement or models based on number of displays generated by of an advertisement. More complex and efficient models include Cost Per Click, CPC, or Cost Per Action, CPA (e.g. for filling-in a web form). The present system enables introduction of a novel settlement model, based on measurements of engagements of users by buttons provided by social media or web pages to express approval for given internet content (such as the Facebook's "Like" button). The system displays on web pages advertisements supplemented by said approval button(s), counts the number of "likes" and/or users, who approve particular advertisement and - as the result - enables settlements with the advertiser based on the number of "likes" and the rate per like ("Cost Per Like" model).

The attached drawing illustrates - by way of a preferred embodiment - computer architecture of the system according to the present invention and a scenario for displaying an advertisement, which can be "liked", as well as the kind of information stored, needed for making settlements according to the "Cost Per Like" model.

### STAGE A ― PLACING ORDER

A system's operator 110 orders to display an advertisement 116 (first sub-content) by providing necessary information to the system 111, responsible for displaying advertisements and settlements in the "Cost Per Like" model (in short: "Cost Per Like system").

### STAGE B - DISPLAYING ADVERTISEMENT

The advertisement 116 is available on a server 112 (first and second server) included in the system 111. When a user, using a web browser 114, enters a web page 113, a piece of code 115 , being a part of the system 111 and embedded in the web page 113, is executed by the web browser 114 (client-side technology). The execution of said piece of code 115 results in a connection with the server 112 and obtaining from the server 112 information necessary for displaying the advertisement 116 and approval button 117 ("Like", second sub-content), uniquely associated with this advertisement 116. This unique association is provided by a unique ID (such as a Uniform Resource Locator, URL), pre-prescribed to the advertisement 116 by the social media system 118, to which the approval button 117 belongs. Alternatively, it is also possible to pre-book a unique ID (such as an URL) for an advertisement 116 with the social media system 118 even before the advertisement 116 itself is created and/or published under the given URL. This is very convenient, because the one can obtain as many unique IDs as necessary in advance and store them for future campaigns. The pre-prescription of pre-booking step can be performed by the server 112 when an advertising campaign is prepared.

The advertisement 116 is then displayed together with the approval button 117 on the web page 113.

### STAGE C - INTERACTION WITH THE ADVERTISEMENT

If the user likes the advertisement 116, she may express it by clicking the approval button 117. The approval button (such as in particular the Facebook's "Like" button) is a web link to an application on a server 119 of the social media system 118 (third server). In other embodiments, said approval button 117 may be a web form or any other application, which triggers said application on the server 119. By clicking the button 117, said application is initiated. The server 119 has an access to a database of users, who voluntary register themselves in the social media system 118. First, the application tries to authenticate the user, who clicked the button 117. Usually this is done by a small file (cookie), stored on the user's terminal, but basically any method provided by the web browser 114 or the user's terminal may be applied. If the authentication process fails (e.g. when the user is not logged-in to the social media system 118 or she is not a registered user of such system 118), the user can be prompted to log-in or register in the social media system 118. She may be directed onto appropriate web page if necessary.

After the user is successfully identified as one of pre-registered users of the social media system 118, the application records the fact that the user approved given advertisement 116 in a log (file, database) accessible to the server 119. As the pre-registered users of the social media system 118 usually provide information about themselves, such as age, sex, occupation etc., said log may be easily supplemented with such information about the user who clicked the button 117. This is preferably performed by said application. Many other data concerning the approval action (date and time of approval, referral information (e.g. information about the kind of terminal, connection or web browser 114 used by the user; web address of the web page 113 viewed by the user etc.) may also be stored in said log by said application.

Last, the database of the social media system 118 also stores information about connections between users. It is therefore possible and preferred to provide the information about the approval action and/or about the approved advertisement 116 to all the connections of the user of the social media system 118, who clicked the button 117. Indeed, clicking on the Facebook's "Like" button results in displaying information about the "liked" content on so-called "walls" of the user's connections.

On clicking the approval button 117, the web browser 114 also sends information confirming the approval action to the Cost Per Like system 111. Optionally, additional information concerning the user and additional information concerning the approval action, as mentioned in the two preceding paragraphs, may also be sent at this occasion to the Cost Per Like system 111, where it is stored.

### STAGE D - REPORTING

The Cost Per Like system 111 connects, on demand, with the server 119 of the social media system 118. It retrieves from the server 119 information about users, who approve particular advertisement (in particular - the aforementioned, such as age, sex, occupation, which are voluntary provided by users to the social media system 118) and possibly other information related to approval actions, stored in suitable log on the server 119. Alternatively, the report may be based on information previously stored in the Cost Per Like system 111, as described in the last paragraph of stage C. Finally, the Cost Per Like system 111 generates a report including the aforementioned information and stores the report in a suitable database 120 on the server 112.

### STAGE E - SETTLEMENTS

At any moment, but in particular - when the emission of the advertisement 116 is over, the system 111 provides the operator 110 with a report, generated from the information 121 stored in the database 120. Said information 121 may in particular include information 122 related to the advertising campaign, such as client's (advertiser's) data, manager responsible, statistics 123 of number of displays and number of clicks on the advertisement 116, number 124 of approvals (i.e. the number of clicks of the approval button 117), as well as cost-related information 125, e.g. "rate per like" and the final emission cost, proportional to the number of approvals ("likes").

## Claims

1. A method for providing a web page content to a user, by a system comprising a first server (112), a second server and a third server (119), wherein said third server (119) has an access to a database of pre-registered users, storing information sufficient to identify said pre-registered users and connections between said pre-registered users, said method comprising the steps of:
(i) obtaining a unique ID assigned to a first sub-content (116) from a first server (112),
(ii) obtaining said first sub-content (116) from a second server,
(iii) obtaining a second sub-content (117) from said third server,
(iv) creating said web page content by adding said second sub-content (117) to said first sub-content (116),
(v) displaying said web page content on said web page (113),
**characterized in that**
said second sub-content (117) is a trigger of an application on said third server (119), preferably a web link or a web form initiating said application, and wherein said application, once initiated by said trigger, performs the following steps:
(vi) authenticating said user and
(vii) recording at least information associating said unique ID and said user in a log accessible for said third server (119).

2. The method according to claim 1, wherein steps (i) - (v) are executed by a piece of code (115), embedded in said web page (113).

3. The method according to claim 2, wherein said piece of code (115) is a client-side technology code, such as Javascript, Macromedia Flash or Silverlight code.

4. The method according to any one of the preceding claims, wherein said application on said third server (119) additionally performs the step of:
(viii) recording in said log accessible for said third server (119) additional information associated with said user and/or said unique ID, such as said user's data retrieved from said database of pre-registered users, date and time of initiation of said application by said trigger, information related to referral by said user, in particular ― the web address of said web page (113).

5. The method according to any one of the preceding claims, wherein said authentication step (vi) is carried out using a file (cookie) stored on the user's terminal or any other authentication method provided by web browser (114) or the user's terminal, employed by said user to view said web page (113).

6. The method according to any one of the preceding claims, wherein said authentication step (vi) is carried out by re-directing said user to a login page, asking said user to provide information sufficient to identify him in said database of pre-registered users.

7. The method according to any one of the preceding claims, further comprising a step of:
(ix) providing information about said first sub-content (116), uniquely identified by said associated unique ID to pre-registered users, to whom said user has connections in said database of pre-registered users.

8. The method according to any one of the preceding claims, wherein said unique ID is a Uniform Resource Locator, URL.

9. The method according to any one of the preceding claims, wherein said first server (112) and said second server are the same server (112).

10. The method according to any one of the preceding claims, wherein said third server (119) is a social media (118) server, such as Facebook, Twitter, MySpace, Blip, Linkedln, Nasza Klasa, Grono etc.

11. The method according to any one of the preceding claims, further comprising a step of:
(x) generating a report associating information about said first sub-content (116) and information retrieved from said log accessible for said third server (119), associated with said first sub-content (116) by said unique ID, and storing said report in a database (120).

12. The method according to claim 11, wherein said report includes any of the following information: information related to referral by said user, in particular - the web address of said web page (113), number of views (123) of said web page (113), number of views (123) of said first sub-content (116) having said unique ID, number of clicks (124) of said second sub-content (117).

13. The method according to claim 11 or 12, wherein said report includes any of the following information: said user's data retrieved from said database of pre-registered users, date and time of clicking said second sub-content (117) by said user.

14. The method according to claim 11, 12 or 13, wherein said report includes additional information about said first sub-content (116) having said unique ID, such as advertising campaign information (122), client's data, cost information (125).
